# EUROPÄISCHE PATENTANMELDUNG

(11) **EP 3 826 103 A1**
(43) Veröffentlichungstag der Anmeldung: **26.05.2021**
(21) Anmeldenummer: 20208826.6
(22) Anmeldetag: 20.11.2020
(51) Int. Cl.: H01M 50/204, B60K 1/04, H01M 50/224, H01M 50/242, H01M 50/249

(54) **BATTERIEGEHÄUSE FÜR EIN ELEKTROMOTORISCH BETREIBBARES FAHRZEUG**

(30) Priorität: 21.11.2019 DE 102019131538
(71) Anmelder: Friedrich Boysen GmbH & Co. KG, 72213 Altensteig (DE)
(72) Erfinder: SCHUBE, Falko, 72213 Altensteig (DE); ROLLER, Felix, 75365 Calw-Holzbronn (DE); FETSCH, Andreas, 76187 Karlsruhe (DE)
(74) Vertreter: Manitz Finsterwald Patent- und Rechtsanwaltspartnerschaft mbB

(57) **Zusammenfassung**

Die Erfindung betrifft ein Batteriegehäuse für ein zumindest zeitweise oder zumindest unterstützend elektromotorisch betreibbares Fahrzeug, wobei das Batteriegehäuse dazu ausgebildet ist, ein Batteriemodul oder mehrere Batteriemodule aufzunehmen. Das Batteriegehäuse umfasst eine Bodenplatte, einen mit der Bodenplatte verbundenen Seitenrahmen und eine mit dem Seitenrahmen verbundene Abdeckung, wobei die Bodenplatte, der Seitenrahmen und die Abdeckung zu einem geschlossenen Gehäusekörper verbunden sind. Die Bodenplatte, der Seitenrahmen und die Abdeckung sind als separate Teile hergestellt. Der Seitenrahmen ist aus mindestens einer Profilstrebe hergestellt, wobei die mindestens eine Profilstrebe als Blechumformteil ausgebildet ist.

## Beschreibung

Die Erfindung betrifft ein Batteriegehäuse für ein zumindest zeitweise oder zumindest unterstützend elektromotorisch betreibbares Fahrzeug, wobei das Batteriegehäuse dazu ausgebildet ist, ein Batteriemodul oder mehrere Batteriemodule aufzunehmen, das Batteriegehäuse umfassend eine Bodenplatte, einen mit der Bodenplatte verbundenen Seitenrahmen und eine mit dem Seitenrahmen verbundene Abdeckung, wobei die Bodenplatte, der Seitenrahmen und die Abdeckung zu einem geschlossenen Gehäusekörper verbunden sind, wobei die Bodenplatte, der Seitenrahmen und die Abdeckung als separate Teile hergestellt sind und wobei der Seitenrahmen aus mindestens einer Profilstrebe hergestellt ist.

Batteriegehäuse zur Aufnahme von Batteriemodulen eines elektromotorisch betriebenen Fahrzeugs sollten eine Reihe von sicherheitstechnischen Anforderungen erfüllen. So sollten sie ein hohes Maß an Aufprallsicherheit im Falle eines Aufpralls des Fahrzeugs auf ein bewegliches oder unbewegliches Hindernis gewährleisten. Das Batteriegehäuse sollte eine hohe Steifigkeit aufweisen und die Batteriemodule vor Beschädigung von außen schützen. Genauso sollten Teile des Batteriegehäuses im Falle eines Aufpralls nicht selbst die in seinem Inneren befindlichen Batteriemodule beschädigen. Als weiteres Erfordernis sollte das Batteriegehäuse die Batteriemodule dicht umschließen und somit verhindern, dass Feuchtigkeit, Schmutz oder andere Verunreinigungen an die Batteriemodule gelangen können. Im Übrigen sollte das Batteriegehäuse ein geringes Eigengewicht aufweisen und möglichst platzsparend und kompakt ausgebildet sein.

Um obengenannte Erfordernisse, insbesondere sichertechnischer Art, zu erfüllen, umfassen die Batteriegehäuse üblicherweise eine Wanne zur Aufnahme der Batteriemodule, welche als tiefgezogenes Blechumformteil mit einem Boden und einstückig damit verbundenen Seitenwänden ausgebildet ist. Die Wanne kann außenseitig von einer zusätzlichen versteifenden Rahmenstruktur umgeben sein, die als einstückig im Strangpressverfahren ausgebildetes Rahmenprofil ausgebildet sein kann. Möglich ist auch, dass die Rahmenstruktur durch im Strangpressverfahren ausgebildete Profilabschnitte zusammengesetzt ist.

Die beschriebenen Batteriegehäuse sind jedoch relativ aufwändig und kostenintensiv in der Herstellung und verfügen darüber hinaus über eine stark eingeschränkte Flexibilität, da jede Änderung von Form, Geometrie oder Größe des Batteriegehäuses die Schaffung geänderter Wannen und entsprechend geänderter Rahmenprofile erfordert.

Es ist deshalb Aufgabe der Erfindung, ein verbessertes Batteriegehäuse zu schaffen, welches ein hohes Maß an Steifigkeit, Festigkeit und Bruchsicherheit bietet und gleichzeitig einfach und kostengünstig herzustellen ist.

Diese Aufgabe wird durch ein Batteriegehäuse mit den Merkmalen des Anspruchs 1 gelöst, und insbesondere dadurch, dass die mindestens eine Profilstrebe des Seitenrahmens als Blechumformteil ausgebildet ist.

Die als Blechumformteil, insbesondere Profilträger, ausgebildete zumindest eine Profilstrebe weist eine große Steifigkeit, Festigkeit und Bruchsicherheit auf, sowie ein großes Umformvermögen im Sinne von einem hohen Energieaufnahme-Potential in Falle eines Aufpralls. Sie eignet sich daher in hervorragender Weise zu Herstellung einer stabilen und aufprallsicheren Struktur von hoher statischer und dynamischer Steifigkeit. Mit relativ einfach strukturierten und einfach herzustellenden Profilstreben bzw. Blechumformteilen sind so auch Seitenrahmen herstellbar, die komplizierte Geometrien aufweisen. Durch die Verwendung von Blechumformteilen lassen sich somit Batteriegehäuse schaffen, die einfach und kostengünstig herzustellen sind.

Das mindestens eine Blechumformteil kann als geschlossenes oder offenes Profil gleicher oder unterschiedlicher Wandstärke ausgebildet sein und beispielsweise auch Durchzüge aufweisen. Das mindestens eine Blechumformteil kann beispielsweise als U-Profil oder als Doppel-T Profil ausgebildet sein. Dabei kann sich jeweils zumindest eine Profilkante des Blechumformteils von dem Gehäusekörper nach außen erstrecken, um die Aufprallsicherheit sowie die statische und dynamische Steifigkeit zu erhöhen.

Der Boden und der Seitenrahmen sind als jeweils separate Teile ausgebildet, im Gegensatz zu der einstückigen Ausbildung einer den Boden und den Seitenrahmen umfassenden Wanne. Zudem ist auch die Abdeckung als separates Teil hergestellt.

Der Seitenrahmen kann einteilig oder mehrteilig ausgebildet sein. Bei einer mehrteiligen Ausbildung des Seitenrahmens sind Änderungen an Form, Geometrie oder Größe des Seitenrahmens einfach und unaufwändig zu bewerkstelligen. In dieser Hinsicht ist zum Beispiel denkbar, dass standardisierte geradlinige Profilstreben bzw. Blechumformteile verschiedener Länge vorgehalten werden, die flexibel nach entsprechenden Erfordernissen oder Vorgaben zu Seitenrahmen unterschiedlicher Form und/oder Gesamtgröße zusammengesetzt werden können.

Die Profilstreben können gerade ausgebildet sein und sich entlang einer einzigen Richtung erstrecken. Die Profilstreben können auch eine oder mehrere Kante(n) oder Biegung(en) aufweisen und sich somit auf unterschiedlichen Seiten der jeweiligen Kante oder Biegung entlang verschiedener Richtungen erstrecken.

Für eine besonders einfache und kostengünstige Herstellung des Batteriegehäuses können die Profilstreben bzw. Blechumformteile beispielsweise gleichartig ausgebildet sein und sich nur durch ihre Gesamtlänge unterscheiden. Dabei können die Profilstreben aus Metall gefertigt sein, was ein hohes Maß an Festigkeit, Steifigkeit und/oder Stabilität des Batteriegehäuses gewährleistet und somit einen sicheren Aufprallschutz für die Batteriemodule bietet.

Zur Herstellung eines stabilen und steifen Batteriegehäuses werden die Profilstreben an ihren jeweiligen Längsenden auf Stoß fest miteinander verbunden. Bei einer einteiligen Ausbildung des Seitenrahmens werden entsprechend die beiden längsseitigen Enden der Profilstrebe auf Stoß fest miteinander verbunden. Denkbar ist hier eine rechtwinklige Verbindung, eine Verbindung mit anderen Winkeln oder auch eine Verbindung als Gehrung. Dies kann durch verschiedene bekannte Techniken, beispielsweise durch Laserschweißen, das Ausbilden von MIG- oder WIG-Schweißverbindungen, MSG-Löten oder auch Kleben geschehen, die alle einfach und kostengünstig durchzuführen sind und eine stabile, feste und dauerhafte Verbindung der Profilstrebe bzw. der Profilstreben gewährleisten.

Vorteilhafte Ausführungsformen der Erfindung sind den abhängigen Ansprüchen, der Beschreibung und der Zeichnung zu entnehmen.

Gemäß einer Ausführungsform der Erfindung umfasst der Seitenrahmen vier an ihren Längsenden miteinander verbundene Profilstreben, wobei jeder Seite des Seitenrahmens eine eigene separate Profilstrebe zugeordnet ist. Dies ermöglicht eine besonders einfache Herstellung des Batteriegehäuses. Die Profilstreben können somit als gerade, sich entlang einer Längsrichtung erstreckende Bauteile gefertigt werden. Die Ausbildung von Biegungen und Kanten, um die sich in verschiedene Richtungen erstreckenden Seiten des Seitenrahmens zu bilden, ist nicht erforderlich.

Gemäß einer Ausführungsform der Erfindung ist der Seitenrahmen rechteckig ausgebildet und umfasst zwei Profilstreben, die in einer Längsrichtung, und zwei Profilstreben, die in einer dazu senkrechten Querrichtung angeordnet sind. Ein derartiger rechteckiger Seitenrahmen und ein dementsprechend quaderförmiges Batteriegehäuse kann im Wesentlichen ohne Raumverlust mit Batteriemodulen bestückt werden und bietet eine optimale Nutzung des im Gehäusekörper zu Verfügung stehenden Raumes. Dies erlaubt eine besonders platzsparende und kompakte Ausgestaltung des Batteriegehäuses. Bei entsprechenden Anforderungen kann der Seitenrahmen natürlich auch von einer rechteckigen Form abweichen.

Gemäß einer Ausführungsform der Erfindung ist die mindestens eine Profilstrebe als Biegeprofil oder Rollformprofil ausgebildet, wodurch sich die Profilstrebe einfach und kostengünstig herstellen lässt. Diese beiden Herstellungsarten für Profilstreben weisen eine große Flexibilität in Bezug auf Form, Breite und Dicke des Profils auf, wodurch sich Profilstreben erzeugen lassen, welche an die verschiedensten Erfordernisse anpassbar sind.

Gemäß einer Ausführungsform der Erfindung bildet die mindestens eine Profilstrebe eine oder mehrere, insbesondere teilweise oder im Wesentlichen vollständig geschlossene, Profilkammern aus. Mit anderen Worten ist die Profilstrebe derart umgeformt, dass sich eine Querschnitts-Struktur ausbildet, die eine oder mehrere teilweise oder im Wesentlichen vollständig geschlossene Profilkammern oder Teilprofile aufweist. Die bei einem Aufprall auftretende Energie kann so zunächst in eine Verformung der Profilkammern überführt werden, wodurch ein Energieübertag auf das Innere des Batteriegehäuses vermindert wird. Durch die Ausbildung von Profilkammern lassen sich somit die statische und dynamische Steifigkeit sowie die Steifigkeit des Seitenrahmens im Falle eines Aufpralls erhöhen.

Gemäß einer Ausführungsform der Erfindung weist das Batteriegehäuse zusätzliche Innenstreben auf, die den Gehäusekörper in separate Bereiche unterteilen und insbesondere parallel zu der Längsrichtung und/oder der Querrichtung angeordnet sind. Zur Gewichtsreduktion können die Innenstreben bereichsweise durchbrochen sein und Aussparungen aufweisen. Die Innenstreben können ähnlich wie die Profilstreben des Seitenrahmens als Blechumformteil ausgebildet sein. Die Innenstreben können mit den Profilstreben der Seitenwand verbunden sein und somit eine stabile Innenstruktur des Batteriegehäuses bilden.

Die einzelnen Bereiche können beispielsweise nur durch in Längsrichtung verlaufende Innenstreben abgeteilt werden, wodurch sich der Gehäusekörper in eine Abfolge länglicher Fächer unterteilen lässt. Hierbei kann jedes dieser Fächer oder jeder der abgeteilten separaten Bereiche jeweils ein oder mehrere Batteriemodule aufnehmen. Die Batteriemodule können beispielsweise direkt an den Innenstreben befestigt werden. Denkbar ist auch, dass die Innenstreben Aussparungen für Befestigungselemente aufweisen, mittels derer die Batteriemodule befestigt werden können.

Zur Abfuhr von in den Batteriemodulen entstehender Wärme kann das Batteriegehäuse zusätzlich eine Kühlplatte umfassen, welche im Inneren des Batteriegehäuses auf der Bodenplatte aufliegt und/oder mit dieser verbunden ist und mit den auf ihr aufliegenden Batteriemodulen in thermischem Kontakt steht.

Gemäß einer Ausführungsform der Erfindung weist das Batteriegehäuse eine zusätzliche verstärkende Struktur auf, welche an dem Seitenrahmen befestigt ist und den Seitenrahmen äußerlich umfänglich umgibt. Die verstärkende Struktur kann einteilig oder mehrteilig ausgebildet sein. Die zusätzliche verstärkende Struktur dient dem Aufprallschutz und wirkt wie ein zweiter schützender Seitenrahmen, der einen Teil der Energie im Falle eines Aufpralls des Fahrzeugs auf ein bewegliches oder unbewegliches Hindernis aufnimmt. Dabei wirken der Seitenrahmen und die verstärkende Struktur zusammen versteifend und erhöhen somit die Aufprallsicherheit und das Energieaufnahme-Potential im Falle eines Aufpralls.

Die verstärkende Struktur kann an einer dem Gehäusekörper abgewandten Außenseite des Batteriegehäuses angeordnet sein und den Seitenrahmen umfänglich umgeben. Davon ausgenommen können bevorzugt allenfalls durch die Längsenden der miteinander verbundenen Profilstreben gebildete Ecken sein. Dadurch wird gewährleistet, dass sich eine stabile und steife Struktur ausbildet und im Wesentlichen der gesamte Seitenrahmen von einer zusätzlichen schützenden Struktur umgeben ist.

Gemäß einer Ausführungsform der Erfindung sind der Seitenrahmen und/oder die verstärkende Struktur aus Eisen oder aus einem Nichteisenmetall gebildet. Die Ausbildung aus Metall verleiht dem Seitenrahmen und/oder der verstärkenden Struktur eine hohe Steifigkeit, hohe Festigkeit und eine gute Aufprallsicherheit. Hierbei können die Profilstreben des Seitenrahmens und die verstärkende Struktur aus identischen oder auch aus unterschiedlichen Materialien gefertigt sein. Beispielsweise können der Seitenrahmen und/oder die verstärkende Struktur aus höherfestem Stahl, Edelstahl oder Karosseriestahl gefertigt sein.

Zur Gewichtsreduktion kann die verstärkende Struktur gemäß einer Ausführungsform der Erfindung bereichsweise durchbrochen sein und Aussparungen aufweisen.

Gemäß einer Ausführungsform der Erfindung ist die verstärkende Struktur mehrteilig ausgebildet und aus einzelnen Profilabschnitten ausgebildet, wobei die Profilabschnitte der verstärkenden Struktur im Wesentlichen identisch ausgeformt sein können und sich beispielsweise nur durch ihre Länge unterscheiden können.. Die Profilabschnitte können als Blechumformteil gleicher oder unterschiedlicher Wandstärke ausgebildet sein und insbesondere im Rollformverfahren oder als Biegeprofil hergestellt sein. Eine Herstellung im Rollformverfahren ermöglicht insbesondere eine Variation von Profilquerschnitt sowie Profilhöhe entlang einer Längserstreckung der Profilabschnitte. Dabei kann die Form der Profilabschnitte beliebig im Rahmen der Herstellbarkeit, insbesondere als Rollformprofil oder als Biegeprofil, variiert werden.

Gemäß einer Ausführungsform der Erfindung kann die verstärkende Struktur aus sich gerade entlang einer Längsrichtung erstreckenden Profilabschnitten oder aus bogenförmigen Profilabschnitten zusammengesetzt sein.

Gemäß einer Ausführungsform der Erfindung verstärken die Profilabschnitte der verstärkenden Struktur jeweils eine Seite des Seitenrahmens und sind von außen in eine jeweilige Profilstrebe des Seitenrahmens eingepasst. Mit anderen Worten ist jeder Seite des Seitenrahmens ein eigenes separates Teil der verstärkenden Struktur, d.h. ein eigener separater Profilabschnitt, zugeordnet und an einer dem Gehäusekörper abgewandten Außenseite einer jeweiligen Profilstrebe mit dieser verbunden.

Gemäß einer Ausführungsform der Erfindung bildet die verstärkende Struktur alleine und/oder zusammen mit den Profilstreben eine oder mehrere, insbesondere teilweise oder im Wesentlichen vollständig geschlossene, Profilkammern aus. Mit anderen Worten können die Profilkammern beispielsweise alleine durch geeignete Umformungen der verstärkenden Struktur gebildet werden. Alternativ können die Profilkammern auch durch ein Zusammenwirken der Profilstreben und der verstärkenden Struktur gebildet werden, wobei entsprechende Bereiche der Profilstreben und der verstärkenden Struktur jeweilige Begrenzungen der Profilkammern bilden. Die hierdurch erzeugte Querschnitts-Struktur mit teilweise oder im Wesentlichen vollständig geschlossenen Profilkammern oder Teilprofilen weist eine erhöhte statische und dynamische Steifigkeit und eine erhöhte Steifigkeit im Falle eines Aufpralls auf. So kann die bei einem Aufprall auftretende Energie zunächst in eine Verformung der Profilkammern überführt werden, wodurch ein Energieübertag auf den Seitenrahmen und/oder das Innere des Batteriegehäuses vermindert wird.

Zur weiteren Erhöhung der Aufprallsicherheit sind gemäß einer Ausführungsform der Erfindung die Profilkammern durch das Einbringen von Schäumen und/oder weiteren Einbauten in Längs- und/oder Quererstreckung der verstärkenden Struktur weiter versteift bzw. zu einer erhöhten Energiedissipation ausgebildet.

Gemäß einer Ausführungsform der Erfindung liegt die verstärkende Struktur bereichsweise an dem Seitenrahmen an und stützt sich an dem Seitenrahmen ab. Dies erhöht die Stoßsicherheit der zusätzlichen Struktur und gewährleistet eine erhöhte Stabilität und Steifigkeit bzw. ein erhöhtes Deformationsvermögen des Batteriegehäuses.

Gemäß einer Ausführungsform der Erfindung ist der an dem Seitenrahmen anliegende Bereich der verstärkenden Struktur klammerartig ausgebildet und umfasst einen Klammerboden und zwei Klammerarme, wobei der Klammerboden an dem Seitenrahmen anliegt und die beiden Klammerarme mit ihren dem Seitenrahmen abgewandten Endabschnitten aneinander anliegen. Dadurch können sich zwischen Bereichen der verstärkenden Struktur einerseits sowie zwischen Bereichen des Seitenrahmens und der verstärkenden Struktur andererseits teilweise oder im Wesentlichen vollständig geschlossene Profilkammern ausbilden, welche die statische und dynamische Steifigkeit als auch die Steifigkeit im Falle eines Aufpralls erhöhen. So kann die bei einem Aufprall auftretende Energie zunächst in eine Verformung der Profilkammern bzw. der Klammerarme überführt werden, wodurch ein Energieübertag auf den Seitenrahmen und/oder das Innere des Batteriegehäuses vermindert wird.

Gemäß einer Ausführungsform der Erfindung sind die Endabschnitte der beiden Klammerarme stoffschlüssig miteinander verbunden. Hierbei können die Endabschnitte der beiden Klammerarme durch eine Schweißnaht, durch Punktschweißen oder durch ähnliche Verfahren miteinander verbunden sein. Dies erhöht die Stabilität und Integrität der verstärkenden Struktur und somit die schützende Wirkung der verstärkenden Struktur im Falle eines Aufpralls.

Gemäß einer Ausführungsform der Erfindung ist die verstärkende Struktur durch eine Mehrzahl von Verbindungselementen, insbesondere Einpressmuttern, Einklippsmuttern, Blindnietmuttern oder Schweißmuttern, mit dem Seitenrahmen verbunden, um eine feste und dauerhafte Verbindung von Seitenrahmen und verstärkender Struktur zu gewährleisten. Sind der Seitenrahmen und/oder die verstärkende Struktur aus Edelstahl gebildet, so wird die Verbindung bevorzugt mittels Blindnietmuttern oder Schweißmuttern hergestellt.

Gemäß einer Ausführungsform der Erfindung weist der Seitenrahmen einen, insbesondere bereichsweise ebenen, unteren Abschluss und/oder oberen Abschluss auf, der mit der Bodenplatte respektive der Abdeckung verbindbar ist. Mit anderen Worten liegt der Seitenrahmen im Bereich des unteren und/oder oberen Abschlusses bereichsweise eben auf der Bodenplatte auf, beziehungsweise bildet eine bereichsweise ebene Abstützung für die Abdeckung. Der untere respektive obere Abschluss kann dabei durch einen Teil einer Profilkante oder einer Profilfläche des Blechumformteils gebildet werden. Durch die Ausbildung des unteren und/oder oberen Abschlusses kann der Seitenrahmen bündig und dicht mit der Bodenplatte beziehungsweise der Abdeckung verbunden werden. Für eine feste und dichte Verbindung wird der untere und/oder obere Abschluss mit der Bodenplatte respektive der Abdeckung dicht gefügt, wobei eine feste Verbindung beispielsweise durch Verschrauben, Schweißen, Nieten, Durchsetzfügen, Kleben oder Falzen erreicht werden kann.

Die Dichtheit des Batteriegehäuses gegenüber dem Eintrag von Feuchtigkeit, Schmutz oder anderen Verunreinigungen in den Gehäuseraum kann gemäß einer Ausführungsform der Erfindung dadurch weiter erhöht werden, dass der untere Abschluss und/oder der obere Abschluss eine umlaufende Dichtrille aufweist, in die ein feuchtigkeitsisolierendes Dichtmaterial einsetzbar ist, um den Seitenrahmen und die Bodenplatte respektive den Seitenrahmen und die Abdeckung feuchtigkeitsdicht zu verbinden. Hierbei kann die Dichtrille bereits während des Herstellungsprozesses der Profilstreben des Seitenrahmens in den jeweiligen Profilstreben ausgebildet werden und beispielsweise eine Sicke zur Aufnahme des Dichtmaterials aufweisen. Das Dichtmaterial kann als, insbesondere durchgängige, Dichtschnur vorliegen und beispielsweise in Form einer Rundschnur ausgebildet sein, die in die Dichtrille eingelegt ist und in der Bodenplatte und/oder der Abdeckung ausgebildete Sicken ausfüllt, um den Gehäuseraum mit den darin befindlichen Batteriemodulen feuchtigkeitsdicht zu verschließen. Denkbar ist auch eine Verwendung einer aufdosierten Dichtungspaste oder anderer Dichtungsformen wie Profildichtungen mit einer oder mehrerer Dichtlippen.

Gemäß einer Ausführungsform der Erfindung ist die Abdeckung mittels einer Mehrzahl lösbarer Schraubverbindungen feuchtigkeitsdicht mit dem Batteriegehäuse verbindbar. Die lösbaren Schraubverbindungen erlauben ein einfaches Öffnen des Batteriegehäuses durch ein Entfernen der Abdeckung, um einen einfachen Austausch von Batteriemodulen zu ermöglichen. Zudem können die lösbaren Schraubverbindungen zur EMV (Elektromagnetische Verträglichkeit)-Schirmung des Batteriegehäuses beitragen.

Gemäß einer Ausführungsform der Erfindung werden die lösbaren Schraubverbindungen durch Schrauben gebildet, welche jeweils in vertikal in dem Batteriegehäuse verlaufende röhrenförmige Schraubkanäle eingreifen. Die Schraubkanäle können in den Profilstreben des Seitenrahmens und/oder in den Innenstreben ausgebildet sein.

Gemäß einer Ausführungsform der Erfindung weisen die Schraubkanäle jeweils einen der Abdeckung zugewandten oberen Abschnitt und einen unteren Abschnitt auf.

Gemäß einer Ausführungsform der Erfindung weist der obere Abschnitt an einer Innenseite ein Schraubgewinde auf. Der untere Abschnitt kann durch eine Aussparung in der Bodenplatte geführt, insbesondere mit der Bodenplatte verstemmt sein, und durch eine Schweißnaht mit der Bodenplatte verbunden sein. Mit anderen Worten durchlaufen die Schraubkanäle den Gehäusekörper von einem unteren Ende des Gehäusekörpers bis zu einem oberen Ende des Gehäusekörpers. Hierbei ist der jeweilige untere Abschnitt an der Bodenplatte fixiert und fest mit dieser verbunden. In das Schraubgewinde des oberen Abschnitts kann durch jeweilige fluchtend ausgebildete Aussparungen in der Abdeckung ein Schraubverschluss eingeführt werden, um die Abdeckung an dem Gehäusekörper zu fixieren.

Um die Stabilität des Schraubkanals zu erhöhen und die Dichtheit des Batteriegehäuses durch die Schraubkanäle nach außen herzustellen, sind gemäß einer Ausführungsform der Erfindung der obere Abschnitt und der untere Abschnitt stoffschlüssig, insbesondere mittels einer umlaufenden Reibschweißnaht, miteinander verbunden.

Die Erfindung wird nachfolgend lediglich beispielhaft anhand der Figuren erläutert.
- Fig. 1: zeigt eine perspektivische Ansicht einer Ausführungsform eines erfindungsgemäßen Batteriegehäuses in einer Explosionsdarstellung,
- Fig. 2A: zeigt einen Abschnitt der Ausführungsform der Fig. 1 in einer perspektivischen Ansicht,
- Fig. 2B: zeigt einen Abschnitt einer weiteren Ausführungsform eines erfindungsgemäßen Batteriegehäuses in einer perspektivischen Ansicht,
- Fig. 3: zeigt einen Abschnitt der Ausführungsform der Fig. 1 in einer Querschnittsansicht entlang der Linie A-A der Fig. 2A,
- Fig. 4A und 4B: zeigen zwei Fertigungsschritte eines weiteren Abschnitts der Ausführungsform der Fig. 1 in einer perspektivischen Ansicht,
- Fig. 5A: zeigt einen weiteren Abschnitt der Ausführungsform der Fig. 1 in einer perspektivischen Ansicht, und
- Fig. 5B und 5C: zeigen zwei Fertigungsschritte eines weiteren Abschnitts der Ausführungsform der Fig. 1 in einer perspektivischen Ansicht.

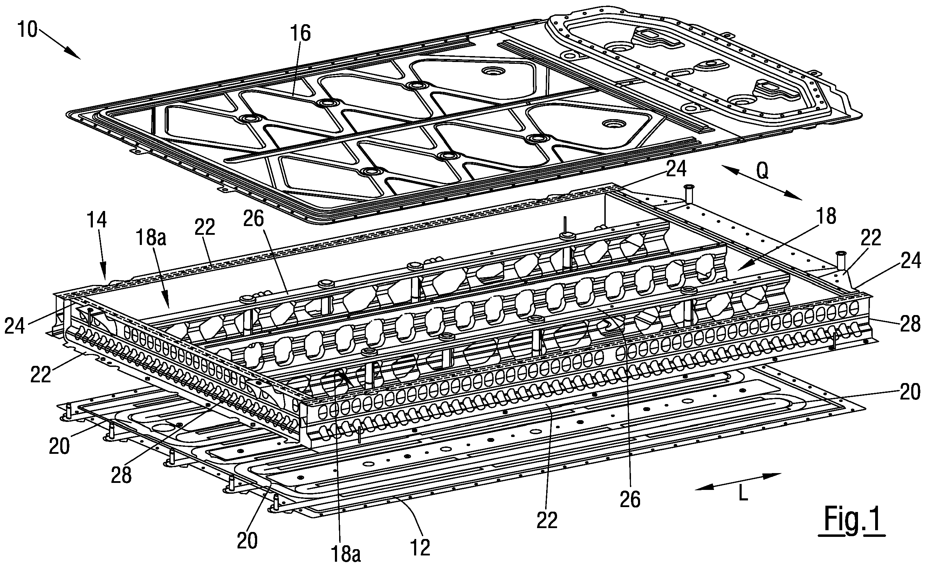

Fig. 1 zeigt eine perspektivische Ansicht einer Ausführungsform eines erfindungsgemäßen Batteriegehäuses 10 für ein zumindest zeitweise oder zumindest unterstützend elektromotorisch betreibbares Fahrzeug zur Aufnahme von nicht gezeigten Batteriemodulen in einer Explosionsdarstellung. Das Batteriegehäuse 10 umfasst eine Bodenplatte 12, einen mit der Bodenplatte 12 verbindbaren Seitenrahmen 14 und eine mit dem Seitenrahmen 14 verbindbare Abdeckung 16, wobei die Bodenplatte 12, der Seitenrahmen 14 und die Abdeckung 16 zu einem geschlossenen Gehäusekörper 18 verbindbar sind. In die Bodenplatte 12 ist eine Kühlplatte 20 zur Kühlung der Batteriemodule integriert. Über die Kühlplatte 20, die mit den Batteriemodulen in thermischem Kontakt steht, kann in den Batteriemodulen entstehende Wärme effektiv abgeführt werden.

Der Seitenrahmen 14 ist rechteckig ausgebildet und umfasst jeweils zwei Profilstreben 22, die in einer Längsrichtung L und einer dazu senkrechten Querrichtung Q angeordnet sind. Die Profilstreben 22 sind als paarweise identische Blechumformteile ausgebildet, welche aus Metall hergestellt sind und beispielsweise aus Edelstahl oder Karosseriestahl gefertigt sein können. Derartige Blechumformteile 22 können einfach und kostengünstig hergestellt werden und beispielsweise als Biegeprofil oder Rollformprofil ausgebildet sein.

In der gezeigten Ausführungsform weisen die Blechumformteile 22 ein U-Profil auf, wobei in andere Ausführungsformen auch Blechumformteile mit anderen Profilformen vorgesehen sein können. Denkbar sind hier Profilformen wie beispielsweise Doppel-T Profile. In der gezeigten Ausführungsform erstrecken sich die Profilkanten der Blechumformteile 22 von dem Gehäusekörper 18 nach außen. Mit anderen Worten weist das Blechumformteil 22 ein Profil auf, welches in Richtung des Gehäusekörpers 18 geschlossen ist. Die Blechumformteile 22 sind an ihren jeweiligen Längsenden 24 paarweise fest miteinander verbunden, beispielsweise durch Laserschweißen, das Ausbilden von MIG- oder WIG-Schweißverbindungen, MSG-Löten oder auch Kleben.

Das Batteriegehäuse 10 weist zusätzliche Innenstreben 26 auf, die auch als Blechumformteil ausgebildet sind und den Gehäusekörper 18 in eine Abfolge länglicher Batteriefächer 18a unterteilen. Hierbei kann jedes der Batteriefächer 18a jeweils wenigstens ein Batteriemodul aufnehmen. Zur Gewichtsreduktion sind die Innenstreben 26 bereichsweise durchbrochen und weisen Aussparungen auf. Die Innenstreben 26 sind mit den Blechumformteilen 22 der Seitenwand 14 verbunden und bilden somit eine stabile und steife Innenstruktur des Batteriegehäuses 10.

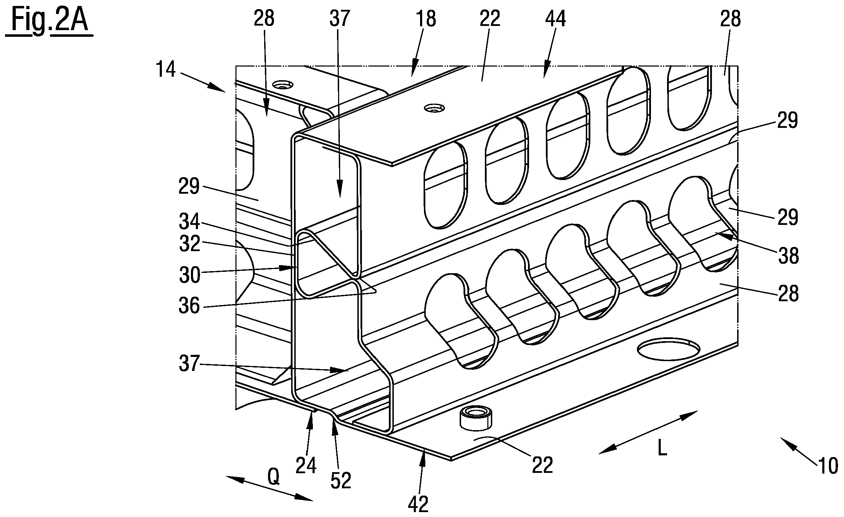

In Fig. 2A ist ein Abschnitt der Ausführungsform der Fig. 1 in einer perspektivischen Ansicht dargestellt. Fig. 2A zeigt eine Ecke des rechtwinkligen Seitenrahmens 14, in der ein sich in Längsrichtung L erstreckendes Blechumformteil 22 und ein sich in Querrichtung Q erstreckendes Blechumformteil 22 mit ihren jeweiligen Längsenden 24 aufeinandertreffen. Wie aus Fig. 1 und Fig. 2A ersichtlich ist, weist das Batteriegehäuse 10 eine zusätzliche verstärkende Struktur 28 auf, welche an dem Seitenrahmen 14 befestigt ist und den Seitenrahmen 14, mit Ausnahme allenfalls der Längsenden 24 der Blechumformteile 22, äußerlich umfänglich umgibt. Die verstärkende Struktur 28 ist mehrteilig aus Profilabschnitten 29 ausgebildet, wobei jeweils ein Profilabschnitt 29 der verstärkenden Struktur 28 ein Blechumformteil 22 des Seitenrahmens 14 unterstützt und von außen in dieses eingepasst ist. Damit ist jedem Blechumformteil 22 des Seitenrahmens 14 ein eigener Profilabschnitt 29 der verstärkenden Struktur 28 zugeordnet und an einer dem Gehäusekörper 18 abgewandten Außenseite eines jeweiligen Blechumformteils 22 mit diesem verbunden. Die Profilabschnitte 29 sind als Blechumformteil ausgebildet und können beispielsweise im Rollformverfahren oder als Biegeprofil hergestellt sein.

Die verstärkende Struktur 28 liegt entlang eines sich in Längsrichtung L und in Querrichtung Q erstreckenden Bereichs an dem Seitenrahmen 14 an, um sich an dem Seitenrahmen 14 abzustützen. Der an dem Seitenrahmen 14 anliegende Abschnitt 30 der verstärkenden Struktur 28 ist klammerartig ausgebildet und umfasst einen Klammerboden 32 und zwei Klammerarme 34, wobei der Klammerboden 32 an dem Seitenrahmen 14 anliegt und die beiden Klammerarme 34 mit ihren dem Seitenrahmen 14 abgewandten Endabschnitten 36 aneinander liegen. Hierdurch bildet sich eine Querschnitts-Struktur mit geschlossenen Profilkammern 37 aus, die eine erhöhte statische und dynamische Steifigkeit und eine erhöhte Steifigkeit im Falle eines Aufpralls aufweist. Zur weiteren Erhöhung der Steifigkeit können die Endabschnitten 36 der beiden Klammerarme 34 beispielsweise mittels einer umlaufenden Schweißnaht, einer Punktnaht oder ähnlicher Verfahren miteinander verbunden sein.

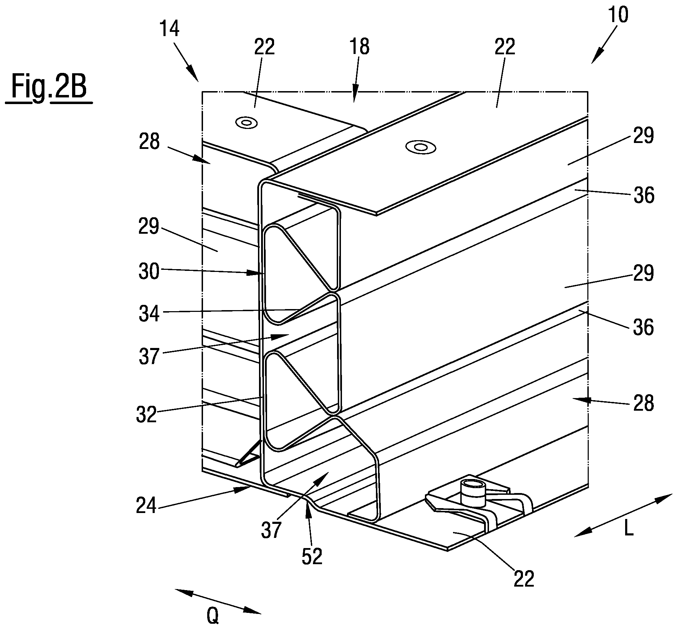

Fig. 2B zeigt einen Abschnitt einer weiteren Ausführungsform eines erfindungsgemäßen Batteriegehäuses 10 in einer perspektivischen Ansicht. Die Ausführungsform der Fig. 2B unterscheidet sich von der in Fig. 2A gezeigten Ausführungsform alleine durch die Ausbildung der Profilabschnitte 29 der verstärkenden Struktur 28. Die Profilabschnitte 29 dieser Ausführungsform weisen zwei nebeneinanderliegende Klammern mit einem jeweiligen Klammerbodem 32 und jeweiligen Klammerarmen 34 auf, die insgesamt fünf Profilkammern 37 ausbilden. Alternativ kann die Form der Profilabschnitte 29 von einer klammerartigen Ausbildung mit zumindest einem Klammerboden 32 und Klammerarmen 34 abweichen und beliebig im Rahmen der Herstellbarkeit, insbesondere als Rollformprofil oder als Biegeprofil, variiert werden.

Zur Gewichtsreduktion ist die verstärkende Struktur 28 bereichsweise durchbrochen und weist entlang der Längsrichtung L bzw. der Querrichtung Q Aussparungen 38 auf. Die separaten Profilabschnitte 29 der verstärkenden Struktur 28 können wie die Blechumformteile 22 des Seitenrahmens 14 aus Metall hergestellt sein. Dabei können die Profilabschnitte 29 der verstärkenden Struktur 28 aus Eisenmetall oder Nichteisenmetall gebildet sein.

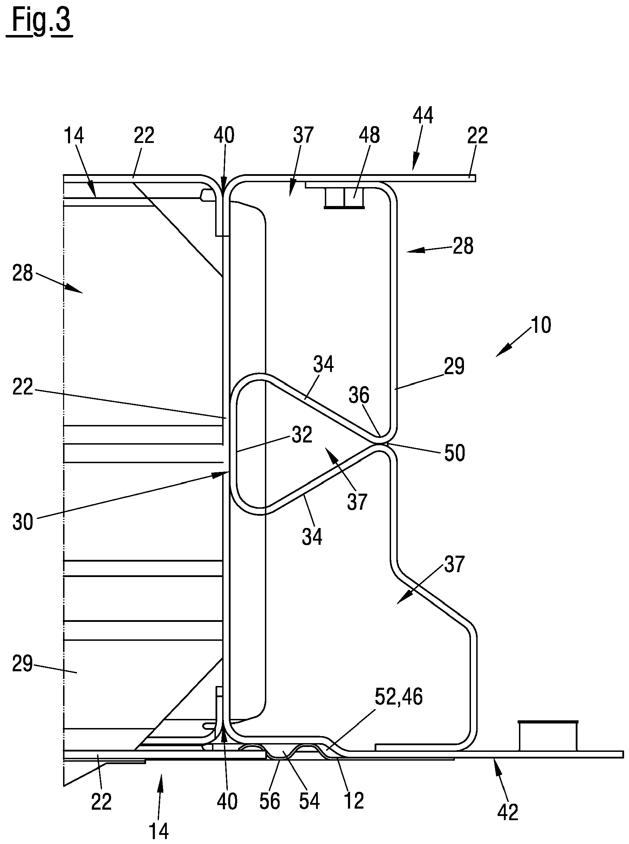

Die Fig. 3 zeigt einen Abschnitt der Ausführungsform der Fig. 1 in einer Querschnittsansicht entlang der Linie A-A der Fig. 2A. Die in der Fig. 3 gezeigten Blechumformteile 22 sind an ihren Längsenden 24 mittels einer Schweißung 40 fest miteinander verbunden, um den steifen Seitenrahmen 14 des Batteriegehäuses 10 zu bilden.

Wie aus der Fig. 3 ersichtlich ist, weisen die Blechumformteile 22 des Seitenrahmens 22 jeweils einen in Längsrichtung L oder in Querrichtung Q verlaufenden unteren Abschluss 42 und einen oberen Abschluss 44 auf, der mit der Bodenplatte 12 respektive der Abdeckung 16 (siehe Fig. 1) verbunden ist. Mit anderen Worten liegt der Seitenrahmen 14 im Bereich des unteren Abschlusses 42 und des oberen Abschlusses 44 bereichsweise eben auf der Bodenplatte 12 auf, beziehungsweise bildet eine bereichsweise ebene Abstützung für die Abdeckung 16. Dabei wird der obere Abschluss 44 durch die sich nach außen erstreckende ebene Profilkante des U-Profils des Blechumformteils 22 gebildet und ist daher vollständig eben ausgebildet. Demgegenüber weist der untere Abschluss 42 eine entlang der Längsrichtung L respektive der Querrichtung Q verlaufende Abstufung 46 auf, die als Dichtrille 52 zur Aufnahme von Dichtmitteln dient.

Durch die Ausbildung des unteren und oberen Abschlusses 42, 44 kann der Seitenrahmen 14 bündig und dicht mit der Bodenplatte 12 beziehungsweise der Abdeckung 16 verbunden werden. Für eine feste und dichte Verbindung ist der untere Abschluss 42 mit der Bodenplatte 12 dicht gefügt, beispielsweise durch Schweißen, Nieten, Durchsetzfügen, Kleben oder Falzen.

Demgegenüber ist die verstärkende Struktur 28 durch eine Mehrzahl von Verbindungselementen 48 wie beispielsweise Einpressmuttern, Einklippsmuttern, Blindnietmuttern oder Schweißmuttern mit den Blechumformteilen 22 des Seitenrahmens 14 verbunden. Dadurch wird eine feste und dauerhafte Verbindung von Seitenrahmen 14 und verstärkender Struktur 28 gewährleistet. Zusätzliche Festigkeit und Steifigkeit erhält die verstärkende Struktur 28 durch eine entlang der Längsrichtung L bzw. der Querrichtung Q verlaufende Schweißnaht 50, welche die Endabschnitte 36 der beiden Klammerarme 34 miteinander verbindet.

Um die Dichtheit des Batteriegehäuses 10 gegenüber dem Eintrag von Feuchtigkeit, Schmutz oder anderen Verunreinigungen in den Gehäuseraum 18 zu erhöhen, weisen der untere Abschluss 42 und der obere Abschluss 44 eine umlaufende Dichtrille 52 auf, in die ein feuchtigkeitsisolierendes Dichtmaterial 54 einsetzbar ist, um den Seitenrahmen 14 und die Bodenplatte 12 respektive den Seitenrahmen 14 und die Abdeckung 16 feuchtigkeitsdicht zu verbinden.

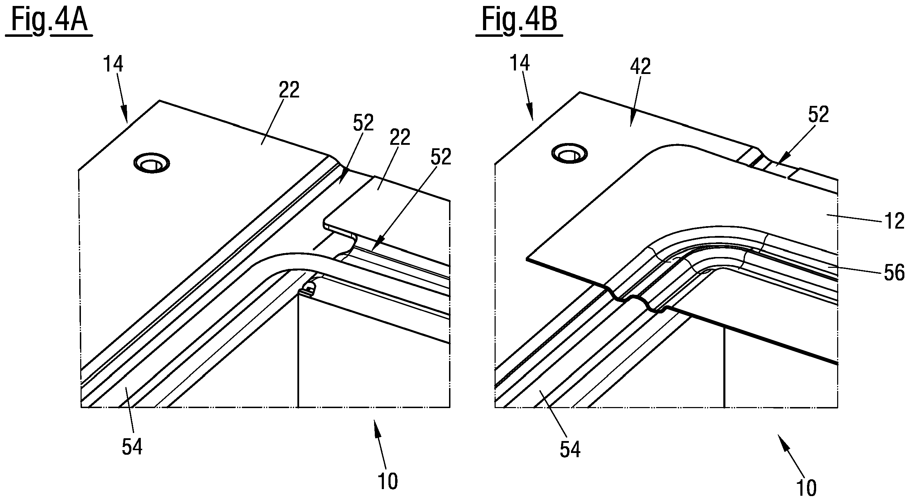

Fig. 4A und 4B zeigen diesbezüglich zwei Fertigungsschritte eines weiteren Abschnitts der Ausführungsform der Fig. 1 in einer perspektivischen Ansicht. Wie in Fig. 4A dargestellt, wird zunächst das als Dichtschnur 54 vorliegende Dichtmaterial in die Dichtrille 52 eingelegt. Gemäß Fig. 4B wird daraufhin die mit einer umlaufenden Sicke 56 versehene Bodenplatte 12 auf den unteren Abschluss 42 des Blechumformteils 22 des Seitenrahmens 14 gelegt, und zwar derart, dass die Dichtschnur 54 die Sicke 56 vollständig ausfüllt, um die Bodenplatte 12 feuchtigkeitsdicht an dem Seitenrahmen 14 zu fixieren.

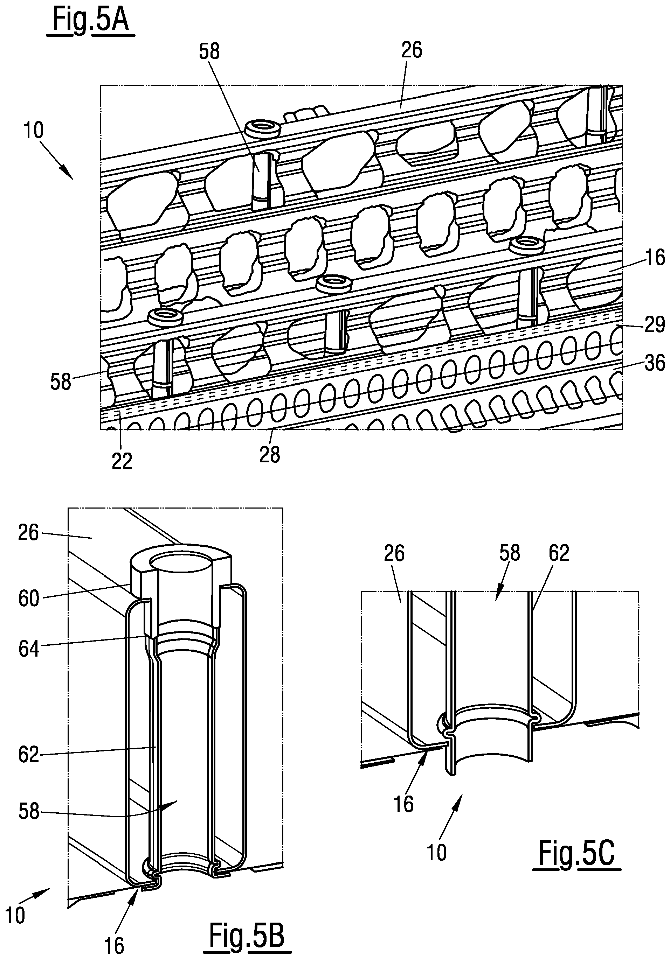

Wie in Fig. 5A dargestellt, ist die Abdeckung 16 mittels einer Mehrzahl lösbarer Schraubverbindungen feuchtigkeitsdicht mit dem Batteriegehäuse 10 verbindbar. Die lösbaren Schraubverbindungen werden durch (nicht gezeigte) Schraubverschlüsse gebildet, welche jeweils in vertikal in dem Batteriegehäuse 10 verlaufende röhrenförmige Schraubkanäle 58 eingreifen, die in den Innenstreben 26 ausgebildet sind.

Wie Fig. 5B zeigt, weisen die Schraubkanäle 58 jeweils einen der Abdeckung 16 zugewandten oberen Abschnitt 60 und einen unteren Abschnitt 62 auf, wobei der obere Abschnitt 60 als Drehteil und der untere Abschnitt 62 als Blechteil ausgebildet ist. Um die Stabilität des Schraubkanals 58 zu erhöhen, sind der obere Abschnitt 60 und der untere Abschnitt 62 stoffschlüssig, insbesondere mittels einer umlaufenden Reibschweißnaht 64, miteinander verbunden. Dabei weist der obere Abschnitt 60 an einer Innenseite ein Schraubgewinde auf, in welches ein Schraubverschluss eingreifen kann, um die Abdeckung 16 lösbar mit dem Batteriegehäuse 10 zu verbinden. Hierzu wird in das Schraubgewinde des oberen Abschnitts 60 durch jeweilige fluchtend ausgebildete Aussparungen in der Abdeckung 16 ein Schraubverschluss eingeführt, um die Abdeckung 16 an dem Batteriegehäuse 10 zu fixieren.

Wie in Fig. 5B und 5C gezeigt, ist der untere Abschnitt 62 des jeweiligen Schraubkanals 58 durch eine entsprechende Aussparung in der Bodenplatte 16 geführt, mit der Bodenplatte 16 verstemmt und durch eine Schweißnaht mit der Bodenplatte 16 verbunden. Hierbei zeigt die Fig. 5C den Schraubkanal 58 vor dem Fertigungsschritt des Verstemmens des unteren Abschnitts 62 mit der Bodenplatte 16.

Das erfindungsgemäße Batteriegehäuse 10 weist eine hohe Festigkeit und Steifigkeit auf und gewährleistet somit einen hohen Aufprallschutz. Durch die mehrteilige Ausbildung des Seitenrahmens 14 und die Verwendung von Blechumformteilen 22 lässt sich das erfindungsgemäße Batteriegehäuse 10 einfach und kostengünstig herstellen.

### Bezugszeichenliste

- 10: Batteriegehäuse
- 12: Bodenplatte
- 14: Seitenrahmen
- 16: Abdeckung
- 18: Gehäusekörper
- 18a: Batteriefach
- 20: Kühlplatte
- 22: Profilstrebe
- 24: Längsende
- 26: Innenstrebe
- 28: verstärkende Struktur
- 29: Profilabschnitt
- 30: Abschnitt der verstärkenden Struktur
- 32: Klammerboden
- 34: Klammerarm
- 36: Endabschnitt
- 37: Profilkammer
- 38: Aussparung
- 40: Schweißung
- 42: unterer Abschluss
- 44: oberer Abschluss
- 46: Abstufung
- 48: Verbindungselement
- 50: Schweißnaht
- 52: Dichtrille
- 54: Dichtschnur
- 56: Sicke
- 58: Schraubkanal
- 60: oberer Abschnitt des Schraubkanals
- 62: unterer Abschnitt des Schraubkanals
- 64: Reibschweißnaht
- L: Längsrichtung
- Q: Querrichtung

## Patentansprüche

1. Batteriegehäuse (10) für ein zumindest zeitweise oder zumindest unterstützend elektromotorisch betreibbares Fahrzeug, wobei das Batteriegehäuse (10) dazu ausgebildet ist, ein Batteriemodul oder mehrere Batteriemodule aufzunehmen, das Batteriegehäuse (10) umfassend eine Bodenplatte (12), einen mit der Bodenplatte (12) verbundenen Seitenrahmen (14) und eine mit dem Seitenrahmen (14) verbundene Abdeckung (16), wobei die Bodenplatte (12), der Seitenrahmen (14) und die Abdeckung (16) zu einem geschlossenen Gehäusekörper (18) verbunden sind, wobei die Bodenplatte (12), der Seitenrahmen (14) und die Abdeckung (16) als separate Teile hergestellt sind und der Seitenrahmen (14) aus mindestens einer Profilstrebe (22) hergestellt ist,
**dadurch gekennzeichnet,**
**dass** die mindestens eine Profilstrebe (22) des Seitenrahmens (14) als Blechumformteil ausgebildet ist.

2. Batteriegehäuse (10) nach Anspruch 1,
**dadurch gekennzeichnet,**
**dass** der Seitenrahmen (14) vier an ihren Längsenden (24) miteinander verbundene Profilstreben (22) umfasst, wobei jeder Seite des Seitenrahmens (14) eine eigene separate Profilstrebe (22) zugeordnet ist, insbesondere wobei der Seitenrahmen (14) rechteckig ausgebildet ist und jeweils zwei Profilstreben (22) umfasst, die in einer Längsrichtung (L) und einer dazu senkrechten Querrichtung (Q) angeordnet sind.

3. Batteriegehäuse (10) nach einem der vorstehenden Ansprüche ,
**dadurch gekennzeichnet,**
**dass** die mindestens eine Profilstrebe (22) als Biegeprofil oder Rollformprofil ausgebildet ist und/oder
**dass** die mindestens eine Profilstrebe (22) eine oder mehrere, insbesondere teilweise oder im Wesentlichen vollständig geschlossene, Profilkammern ausbildet.

4. Batteriegehäuse (10) nach einem der vorstehenden Ansprüche,
**dadurch gekennzeichnet,**
**dass** das Batteriegehäuse (10) zusätzliche Innenstreben (26) aufweist, die den Gehäusekörper (18) in separate Bereiche (18a) unterteilen und insbesondere parallel zu der Längsrichtung (L) und/oder der Querrichtung (Q) angeordnet sind.

5. Batteriegehäuse (10) nach einem der vorstehenden Ansprüche,
**dadurch gekennzeichnet,**
**dass** das Batteriegehäuse (10) eine zusätzliche verstärkende Struktur (28) aufweist, welche an dem Seitenrahmen (14) befestigt ist und den Seitenrahmen (14) äußerlich umfänglich umgibt.

6. Batteriegehäuse (10) nach Anspruch 5,
**dadurch gekennzeichnet,**
**dass** der Seitenrahmen (14) und/oder die verstärkende Struktur (28) aus Eisen oder aus einem Nichteisenmetall gebildet sind und/oder dass die verstärkende Struktur (28) bereichsweise durchbrochen ist und Aussparungen aufweist.

7. Batteriegehäuse (10) nach Anspruch 5 oder 6,
**dadurch gekennzeichnet,**
**dass** die verstärkende Struktur (28) mehrteilig aus einzelnen Profilabschnitten (29), insbesondere als Blechumformteil, ausgebildet ist, insbesondere wobei die verstärkende Struktur (28) aus sich gerade entlang einer Längsrichtung erstreckenden Profilabschnitten (29) oder aus bogenförmigen Profilabschnitten (29) zusammengesetzt ist und/oder insbesondere wobei die einzelnen Profilabschnitte (29) der verstärkenden Struktur (28) jeweils eine Seite des Seitenrahmens (14) verstärken und von außen in eine jeweilige Profilstrebe (22) des Seitenrahmens (14) eingepasst sind.

8. Batteriegehäuse (10) nach einem der Ansprüche 5 bis 7,
**dadurch gekennzeichnet,**
**dass** die verstärkende Struktur (28) alleine und/oder zusammen mit den Profilstreben (22) eine oder mehrere, insbesondere teilweise oder im Wesentlichen vollständig geschlossene, Profilkammern (37) ausbildet, insbesondere wobei in die Profilkammern (37) Schäume und/oder weitere Einbauten in Längs- und/oder Quererstreckung der verstärkenden Struktur (28) eingebracht sind.

9. Batteriegehäuse (10) nach einem der Ansprüche 5 bis 8,
**dadurch gekennzeichnet,**
**dass** die verstärkende Struktur (28) bereichsweise an dem Seitenrahmen (14) anliegt und sich an dem Seitenrahmen (14) abstützt.

10. Batteriegehäuse (10) nach Anspruch 9,
**dadurch gekennzeichnet,**
**dass** ein an dem Seitenrahmen (14) anliegender Abschnitt (30) der verstärkenden Struktur (28) klammerartig ausgebildet ist und einen Klammerboden (32) und zwei Klammerarme (34) umfasst, wobei der Klammerboden (32) an dem Seitenrahmen (14) anliegt und die beiden Klammerarme (34) mit ihren dem Seitenrahmen (14) abgewandten Endabschnitten (36) aneinander liegen, insbesondere wobei die Endabschnitte (36) der beiden Klammerarme (34) stoffschlüssig, insbesondere durch eine Schweißnaht (50) oder durch Punktschweißen, miteinander verbunden sind.

11. Batteriegehäuse (10) nach einem der Ansprüche 5 bis 10,
**dadurch gekennzeichnet,**
**dass** die verstärkende Struktur (28) durch eine Mehrzahl von Verbindungselementen (48), insbesondere Einpressmuttern, Einklippsmuttern, Blindnietmuttern oder Schweißmuttern, mit dem Seitenrahmen (14) verbunden ist.

12. Batteriegehäuse (10) nach einem der vorstehenden Ansprüche,
**dadurch gekennzeichnet**,
das der Seitenrahmen (14) einen, insbesondere bereichsweise ebenen, unteren Abschluss (42) und/oder oberen Abschluss (44) aufweist, der bündig mit der Bodenplatte (12) respektive der Abdeckung (16) verbindbar ist, insbesondere wobei der untere Abschluss (42) und/oder der obere Abschluss (44) eine umlaufende Dichtrille (52) aufweist, in die ein feuchtigkeitsisolierendes Dichtmaterial (54) einsetzbar ist, um den Seitenrahmen (14) und die Bodenplatte (12) respektive den Seitenrahmen (14) und die Abdeckung (16) feuchtigkeitsdicht zu verbinden.

13. Batteriegehäuse (10) nach einem der vorstehenden Ansprüche,
**dadurch gekennzeichnet,**
**dass** die Abdeckung (16) mittels einer Mehrzahl lösbarer Schraubverbindungen feuchtigkeitsdicht mit dem Batteriegehäuse (10) verbindbar ist.

14. Batteriegehäuse (10) nach Anspruch 13,
**dadurch gekennzeichnet,**
**dass** die lösbaren Schraubverbindungen durch Schrauben gebildet werden, welche jeweils in vertikal in dem Batteriegehäuse (10) verlaufende röhrenförmige Schraubkanäle (58) eingreifen.

15. Batteriegehäuse (10) nach Anspruch 14,
**dadurch gekennzeichnet,**
**dass** die Schraubkanäle (58) jeweils einen der Abdeckung (16) zugewandten oberen Abschnitt (60) und einen unteren Abschnitt (62) aufweisen, insbesondere wobei der obere Abschnitt (60) an einer Innenseite ein Schraubgewinde aufweist und der untere Abschnitt (62) durch eine Aussparung in der Bodenplatte (16) geführt und durch eine Schweißnaht mit der Bodenplatte verbunden ist, und/oder
insbesondere wobei der obere Abschnitt (60) und der untere Abschnitt (62) stoffschlüssig miteinander verbunden sind.
